# EUROPÄISCHE PATENTANMELDUNG

(11) **EP 3 467 735 A1**
(43) Veröffentlichungstag der Anmeldung: **10.04.2019**
(21) Anmeldenummer: 17195134.6
(22) Anmeldetag: 06.10.2017
(51) Int. Cl.: G06Q 10/08

(54) **VERFAHREN ZUR PRÜFUNG EINER IDENTITÄT EINES PAKETEMPFÄNGERS, MOBILES ENDGERÄT UND SYSTEM**

(71) Anmelder: Deutsche Telekom AG, 53113 Bonn (DE)
(72) Erfinder: MAHN, Alexander, 01705 Freital (DE)
(74) Vertreter: Patentship Patentanwaltsgesellschaft mbH

(57) **Zusammenfassung**

Verfahren zur Prüfung einer Identität eines Empfängers einer Lieferung gegenüber einem Zusteller der Lieferung, mobiles Endgerät und System.

Die Erfindung betrifft ein Verfahren zur Prüfung einer Identität eines Empfängers einer Lieferung gegenüber einem Zusteller der Lieferung. Das Verfahren umfasst die Schritte des Generierens eines Identifikationscodes in einem Codegenerator 101. Weitere Schritte sind das Senden des generierten Identifikationscodes an ein erstes Endgerät 103 des Empfängers und das Senden des generierten Identifikationscodes an ein mobiles zweites Endgerät 105 des Zustellers. Der nächste Schritt ist das Übertragen des empfangenen Identifikationscodes von dem ersten Endgerät 103 an das mobile zweite Endgerät 105. Es folgt ein Abgleichen des an das mobile zweite Endgerät 105 gesendeten generierten Identifikationscodes und des an das mobile zweite Endgerät 105 übertragenen Identifikationscodes durch das mobile zweite Endgerät 105. War der Abgleich positiv, wird die Identität des Empfängers bestätigt.

Die Erfindung betrifft des Weiteren ein mobiles Endgerät 105 und ein System 100.

## Beschreibung

### Technisches Gebiet

Die Erfindung betrifft ein Verfahren zur Prüfung einer Identität eines Empfängers einer Lieferung gegenüber einem Zusteller der Lieferung, ein mobiles Endgerät und ein System zum Identifizieren eines Empfängers einer Lieferung gegenüber einem Zusteller der Lieferung.

### Technischer Hintergrund

Mit zunehmendem Online-Versand steigt die Anzahl an Lieferungen, insbesondere Paketlieferungen, stark an. Die bestellten Pakete werden von Kunden, also berechtigten Empfängern, erwartet und von Lieferdiensten zugestellt. Ein Lieferdienstmitarbeiter, ein Zusteller, übergibt hierbei das Paket beispielsweise persönlich an einen Empfänger. Um die Identität des Empfängers zu überprüfen und um die Übergabe zu quittieren, nimmt der Zusteller eine Unterschrift des Empfängers entgegen. So soll überprüft werden, ob der Empfänger der berechtigte Empfänger ist.

Aufgrund der Digitalisierung und der elektronischen Verwaltung der Lieferdienste werden die Unterschriften inzwischen elektronisch auf einem mobilen Endgerät des Zustellers entgegengenommen.

Ein Problem hierbei ist es, dass die Qualität der Unterschrift auf einem solchen mobilen Endgerät häufig sehr schlecht und kaum oder gar nicht lesbar ist. Als Folge hieraus kann der Zusteller die Identität des Empfängers nicht so sicher überprüfen, als wäre die Unterschrift auf Papier und evtl. mit einer Schreibunterlage abgegeben worden. Es wird darauf vertraut, dass derjenige, der das Paket entgegennimmt und ein Zeichen auf dem mobilen Endgerät des Zustellers setzt, auch der berechtigte Empfänger ist.

Jedoch kommt es immer wieder vor, dass unberechtigte Dritte sich als berechtigte Empfänger ausgeben und mit einer kaum leserlichen Unterschrift den Empfang des Pakets bestätigen. Der Zusteller kann aufgrund der schlechten Qualität der Unterschrift nicht erkennen, dass der unberechtigte Dritte nicht der berechtigte Empfänger ist, und übergibt das Paket in dem Glauben, die Übergabe an den berechtigten Empfänger ausgeführt zu haben.

### Zusammenfassung der Erfindung

Vor diesem Hintergrund stellt sich die Aufgabe, ein verbessertes Konzept dafür bereitzustellen, die Identität eines Empfängers einer Lieferung zu überprüfen.

Diese Aufgabe wird durch die Merkmale der unabhängigen Ansprüche gelöst. Vorteilhafte Weiterbildungsformen sind Gegenstand der abhängigen Ansprüche.

Gemäß einem ersten Aspekt wird die Aufgabe durch ein Verfahren zur Prüfung einer Identität eines Empfängers einer Lieferung gegenüber einem Zusteller der Lieferung gelöst. Das Verfahren umfasst folgende Schritte:
- Generieren eines Identifikationscodes in einem Codegenerator;
- Senden des generierten Identifikationscodes an ein erstes Endgerät des Empfängers;
- Senden des generierten Identifikationscodes an ein mobiles zweites Endgerät des Zustellers;
- Übertragen des empfangenen Identifikationscodes von dem ersten Endgerät an das mobile zweite Endgerät;
- Abgleichen des an das mobile zweite Endgerät gesendeten generierten Identifikationscodes und des an das mobile zweite Endgerät übertragenen Identifikationscodes durch das mobile zweite Endgerät;
- Bestätigen der Identität des Empfängers, wenn der Abgleich positiv war.

Ein Vorteil eines derartigen Verfahrens ist es, dass keine Unterschrift benötigt wird, um die Identität des berechtigten Empfängers der Lieferung gegenüber dem Zusteller der Lieferung zweifelsfrei festzustellen.

Der Identifikationscode wird in einem Codegenerator generiert. Bei dem Codegenerator kann es sich beispielsweise um ein Computersystem handeln. Der Codegenerator kann von einem Lieferdienst oder von einem Händler bzw. einem Online-Händler betrieben werden. Bei dem Identifikationscode kann es sich um beliebige, an sich bekannte Code-Arten handeln, wie zum Beispiel eine alphanumerische Zeichenfolge, einen Barcode oder einen QR-Code.

Das erste Endgerät des Empfängers kann ein mobiles Endgerät sein. Beispielsweise ist das erste Endgerät ein mobiles Computersystem wie ein Smartphone, bzw. ein Handy, ein Notebook oder ein Tablet-Computer. Das erste Endgerät des Empfängers kann ebenso ein immobiles Endgerät, wie ein stationäres Computersystem sein, beispielsweise ein PC. Das erste Endgerät weist eine Empfangseinrichtung auf, so dass der generierte Identifikationscode von dem ersten Endgerät empfangen werden kann. Dies kann beispielsweise über das Internet erfolgen, aber auch über Mobilfunknetze oder andere drahtgebundene oder drahtlose Kommunikationsmöglichkeiten.

Das zweite Endgerät des Zustellers ist ebenso dazu ausgestaltet, den generierten Identifikationscode des Codegenerators zu empfangen. Das zweite Endgerät kann ein Handgerät zur Paketverwaltung sein, aber auch ein anderes mobiles Computersystem.

Gemäß einer vorteilhaften Ausgestaltung erfolgt der Schritt des Übertragens des empfangenen Identifikationscodes von dem ersten Endgerät an das mobile zweite Endgerät mittels einer Kamera des mobilen zweiten Endgeräts.

Die Verwendung einer in dem mobilen zweiten Endgerät integrierten Kamera stellt ein ergonomisches Erfassungsmittel zur Verfügung, das intuitiv und einfach zu bedienen ist.

Gemäß einer alternativen vorteilhaften Ausgestaltung erfolgt der Schritt des Übertragens des empfangenen Identifikationscodes von dem ersten Endgerät an das mobile zweite Endgerät mittels akustischer Übertragung.

Gerade Handys oder Smartphones weisen zu Zwecken der Telefonie ein Mikrofon und einen Lautsprecher auf. Diese Bauelemente sind besonders billig. Somit kann kostengünstig eine Übertragungsmethode realisiert werden.

Gemäß einer weiteren alternativen Ausgestaltung erfolgt der Schritt des Übertragens des empfangenen Identifikationscodes von dem ersten Endgerät an das mobile zweite Endgerät mittels Nahfeldübertragung, insbesondere NFC.

Nahfeldübertragung (engl. Near Field Communication [NFC]) ist inzwischen ein gängiger Standard zur Datenübermittlung. Eine derartige Übertragung bietet u. a. den Vorteil, dass die Reichweite stark begrenzt ist, so dass ein Abgreifen von Daten durch unberechtigte Dritte erschwert wird. Auch wird hierbei relativ wenig Energie zu Übertragen verbraucht.

Gemäß einer vorteilhaften Ausgestaltung wird nach dem Bestätigen der Identität des Empfängers die Übergabe der Lieferung quittiert. Durch die Übertragung des Identifikationscodes von dem ersten Endgerät an das zweite Endgerät kann zusätzlich zum Bestätigen der Identität des Empfängers auch der Erhalt der Lieferung quittiert werden, so dass der Zusteller einen Beleg dafür hat, die Lieferung ordnungsgemäß abgeliefert zu haben. Hierbei kann die Quittierung durch das bloße Übertragen des generierten Identifikationscodes von dem ersten Endgerät an das zweite Endgerät erfolgen, jedoch ist es ebenso möglich, dass durch die Übertragung weitere Daten und Quittierungsinformationen hinzugefügt werden.

Gemäß einer weiteren vorteilhaften Ausgestaltung werden die beiden Schritte des Sendens des generierten Identifikationscodes ohne zeitliche Verzögerung zueinander ausgeführt.

Dadurch, dass an den Zusteller und an den Empfänger der generierte Identifikationscode ohne zeitliche Verzögerung zueinander gesendet wird, d. h. gleichzeitig gesendet wird, wird es erschwert, den Identifikationscode von einem der beiden Geräte zu manipulieren oder unberechtigt zu übertragen.

Gemäß einer weiteren vorteilhaften Ausgestaltung wird vor dem Schritt des Generierens eines Identifikationscodes der Identifikationscode durch das mobile zweite Endgerät angefordert.

Ein Vorteil dieser Ausgestaltung ist es, dass Manipulationen an dem Identifikationscode auf dem ersten Endgerät und/oder dem zweiten Endgerät durch das Anfordern des Identifikationscodes erschwert werden. So kann der Zusteller beispielsweise erst unmittelbar vor Übergabe der Lieferung den Identifikationscode anfordern. Somit haben weder der Zusteller noch der Empfänger oder unberechtigte Dritte zeitlich die Möglichkeit, den Identifikationscode zu manipulieren oder zu kopieren.

Gemäß einer weiteren vorteilhaften Ausgestaltung stellt das erste Endgerät den empfangenen Identifikationscode automatisch dem mobilen zweiten Endgerät bereit.

Das automatische Bereitstellen entspricht einer automatischen Übertragung an das zweite Endgerät und kann beispielsweise nach einer vorbestimmten Zeit ab dem Erhalt des Identifikationscodes erfolgen oder auf Anfordern des Identifikationscodes durch das mobile zweite Endgerät des Zustellers. Ein Vorteil hiervon ist es, dass der Empfänger sein erstes Endgerät nicht manuell bedienen muss, um den Identifikationscode dem zweiten Endgerät und somit dem Zusteller bereitzustellen.

Gemäß einem zweiten Aspekt der Erfindung wird die Aufgabe durch ein mobiles Endgerät mit einer Empfangseinrichtung, einem Speicher und einer Abgleichvorrichtung gelöst. Das mobile Endgerät ist dazu eingerichtet, Identifikationscodes über die Empfangseinrichtung zu empfangen und die empfangenen Identifikationscodes in dem Speicher zu speichern. Das mobile Endgerät ist weiter dazu eingerichtet, zwei gespeicherte Identifikationscodes durch die Abgleichvorrichtung abzugleichen, die einer Lieferung zugeordnet sind. Nach einem positiven Abgleich wird eine Identität eines Empfängers der Lieferung bestätigt.

Gemäß einer vorteilhaften Ausgestaltung umfasst die Empfangseinrichtung eine Kamera und/oder ein Mikrofon und/oder ein Funkmodul.

Gemäß einer weiteren vorteilhaften Ausgestaltung ist das mobile Endgerät dazu eingerichtet, einen Identifikationscode von einem Codegenerator anzufordern.

Gemäß einer weiteren vorteilhaften Ausgestaltung ist das mobile Endgerät dazu eingerichtet, den Identifikationscode als Quittierung anzunehmen.

Vorteile dieser Ausgestaltungen entsprechen im Wesentlichen den zum ersten Aspekt genannten Vorteilen.

Gemäß einer weiteren vorteilhaften Ausgestaltung ist das mobile Endgerät dazu eingerichtet, ein Signal auszusenden, um eine Übertragung des Identifikationscodes von einem anderen Endgerät an das mobile Endgerät zu initiieren.

Ein Vorteil dieser Ausgestaltung ist es, dass zur Übertragung des Identifikationscodes von dem anderen Endgerät an das mobile Endgerät kein Einwirken eines Benutzers des anderen Endgeräts nötig ist. Dies erleichtert den Abgleichvorgang bei der Übergabe der Lieferung.

Gemäß einem dritten Aspekt wird die Aufgabe durch ein System zum Identifizieren eines Empfängers einer Lieferung gegenüber einem Zusteller der Lieferung gelöst. Das System umfasst ein erstes Endgerät eines Empfängers, ein mobiles zweites Endgerät eines Zustellers und einen Codegenerator, wobei das System dazu eingerichtet ist, ein Verfahren gemäß dem ersten Aspekt auszuführen.

### Kurze Beschreibung der Figuren

Weitere Ausführungsbeispiele werden Bezug nehmend auf die beiliegenden Zeichnungen erläutert. Es zeigen:
- Fig. 1: eine schematische Darstellung eines Systems gemäß einer Ausgestaltung der Erfindung;
- Fig. 2: eine schematische Darstellung eines mobilen Endgeräts gemäß einer Ausgestaltung der Erfindung; und
- Fig. 3: ein schematisches Blockdiagramm eines Verfahrens zur Identitätsprüfung gemäß einer Ausführungsform.

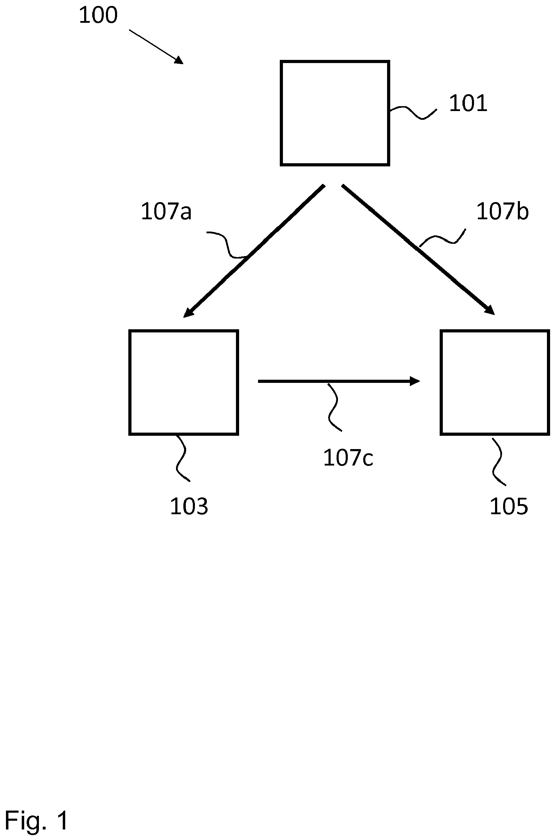

Fig. 1 zeigt ein System 100. Das System 100 weist einen Codegenerator 101 auf. Bei dem Codegenerator 101 handelt es sich im gezeigten Ausführungsbeispiel um ein Computersystem eines Lieferdienstes. In einem weiteren Ausführungsbeispiel handelt es sich um ein Computersystem eines Händlers, einer Onlineplattform, oder eines anderen Anbieters, der derartige Dienst anbietet bzw. vermietet. Der Codegenerator 101 ist dazu eingerichtet Identifikationscodes zu erzeugen und diese zu versenden.

Das System 100 weist des Weiteren ein erstes Endgerät 103 eines Empfängers auf der eine Lieferung erwartet. Das erste Endgerät 103 ist im beschriebenen Ausführungsbeispiel ein Smartphone des Empfängers. In weiteren Ausgestaltungen kann es sich bei dem ersten Endgerät 103 auch um ein Handy, ein Tablet, ein Notebook oder ein anderes mobiles Endgerät handeln. In wieder anderen Ausgestaltungen kann das erste Endgerät 103 auch ein immobiles Endgerät, wie beispielsweise ein Desktop-PC, sein.

Des Weiteren weist das System 100 ein mobiles zweites Endgerät 105 eines Zustellers auf. Im beschriebenen Ausführungsbeispiel handelt es sich bei dem mobilen zweiten Endgerät 105 um ein spezielles Paketverwaltungsgerät, mit dem der Zusteller die Übergabe eines Paketes quittieren und die Daten für die Auslieferung für einzelne Pakte speichern kann. In weiteren Ausgestaltungen handelt es sich um ein mobiles Computersystem, wie ein Smartphone oder einen Tablet-Computer.

Der Codegenerator 101 generiert einen Identifikationscode. Der Identifikationscode ist dazu ausgelegt, einen Empfänger gegenüber einem Zusteller einer Lieferung zu identifizieren. Hierfür ist der Identifikationscode an eine bestimmte Lieferung gekoppelt, beispielsweise durch eine Liefernummer, die in dem Identifikationscode integriert ist oder der der Identifikationscode zugewiesen ist. Der Codegenerator 101 kann Daten wie den Identifikationscode an das erste Endgerät 103 des Empfängers senden (siehe Pfeil 107a). Ebenso kann der Codegenerator 101 Daten wie den Identifikationscode an das mobile zweite Endgerät 105 des Zustellers senden (siehe Pfeil 107b). Hierfür sendet der Codegenerator 101 den generierten Identifikationscode an einen Sender, der den Identifikationscode überträgt. In einer weiteren Ausgestaltung umfasst der Codegenerator 101 einen Sender, wobei der Codegenerator 101 den Identifikationscode über den integrierten Sender sendet, um den Identifikationscode zu übertragen.

Im gezeigten System 100 von Fig. 1 kann das erste Endgerät 103 Daten an das zweite Endgerät 105 übertragen (siehe Pfeil 107c). In weiteren Ausgestaltungen ist ein Datenaustausch in beide Richtungen möglich, so dass auch das zweite Endgerät 105 Daten an das erste Endgerät 103 übertragen kann. Das erste Endgerät 103 und das zweite Endgerät 105 können dann untereinander kommunizieren und Daten austauschen.

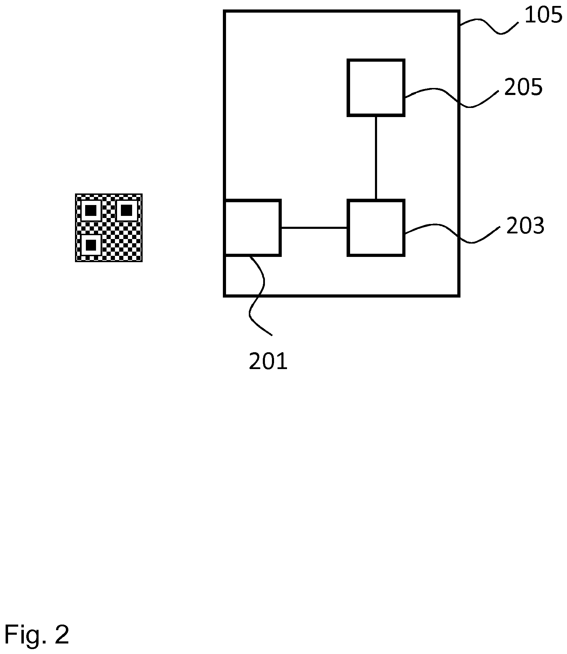

Fig. 2 zeigt ein mobiles zweites Endgerät 105 gemäß einer Ausgestaltung der Erfindung. Das zweite Endgerät 105 weist eine Empfangseinrichtung 201 auf. Die Empfangseinrichtung 201 ist so ausgebildet, dass Informationen von der Empfangseinrichtung 201 aufgenommen und zumindest innerhalb des mobilen zweiten Endgeräts 105 weitergegeben werden können. Bei der Empfangseinrichtung 201 handelt es sich im gezeigten Ausführungsbeispiel um eine Kamera, mit der Bilddaten aufgenommen werden können. In weiteren Ausgestaltungen kann die Empfangseinrichtung 201 zusätzlich oder alternativ ein Mikrofon und/oder ein Funkmodul umfassen.

Das mobile zweite Endgerät 105 weist weiter einen Speicher 203 auf. Daten, die von der Empfangseinrichtung 201 aufgenommen wurden, werden in dem Speicher 203 gespeichert. Die Speicherung in dem Speicher 203 erfolgt im beschriebenen Ausführungsbeispiel vorübergehend, d. h. nach einer Verarbeitung durch das mobile zweite Endgerät 105 werden die Daten aus dem Speicher 203 durch eine, in Fig. 2 nicht gezeigte, Speichersteuerung gelöscht. Dies erhöht die Datensicherheit. In einer alternativen Ausgestaltung können die empfangenen Daten, die von der Empfangseinrichtung 201 in dem Speicher 203 gespeichert werden, zur Dokumentation erhalten bleiben. In einer nicht gezeigten Ausgestaltung ist der Speicher 203 in der Empfangseinrichtung 201 oder in einem anderen Bauteil des mobilen zweiten Endgeräts 105 integriert.

Das mobile zweite Endgerät 105 weist des Weiteren eine Abgleichvorrichtung 205 auf, beispielsweise einen Prozessor wie einen Mikrocontroller. Die Abgleichvorrichtung 205 ist dazu eingerichtet, Daten aus dem Speicher 203 zu vergleichen. Im beschriebenen Ausführungsbeispiel ruft die Abgleichvorrichtung 205 hierzu zwei Identifikationscodes aus dem Speicher 203 ab. Zum einen wird der Identifikationscode aus dem Speicher 203 abgerufen, den das zweite Endgerät 105 von dem Codegenerator 101 gesendet bekommen hat. Als zweiten Identifikationscode wird der Identifikationscode aus dem Speicher 203 abgerufen, der von dem ersten Endgerät 103 an das mobile zweite Endgerät 105 übertragen wurde.

Der Abgleich erfolgt auf an sich bekannte Weise, beispielsweise durch einen Vergleich von Hashwerten. Das Ergebnis des Abgleichs wird auf dem mobilen zweiten Endgerät 105 ausgegeben. Die Ausgabe des Ergebnisses des Abgleichs kann hierbei akustisch und/oder visuell erfolgen. Hierfür weist das mobile zweite Endgerät 105 eine, in Fig. 2 nicht gezeigte, Ausgabeeinrichtungen auf, wie beispielsweise einen Flachbildschirm und/oder einen Lautsprecher. In einer alternativen Ausgestaltung wird das Ergebnis des Abgleichs nicht ausgegeben. Eine Bestätigung der Identität des Empfängers erfolgt dann beispielsweise durch Ausbleiben einer Fehlermeldung.

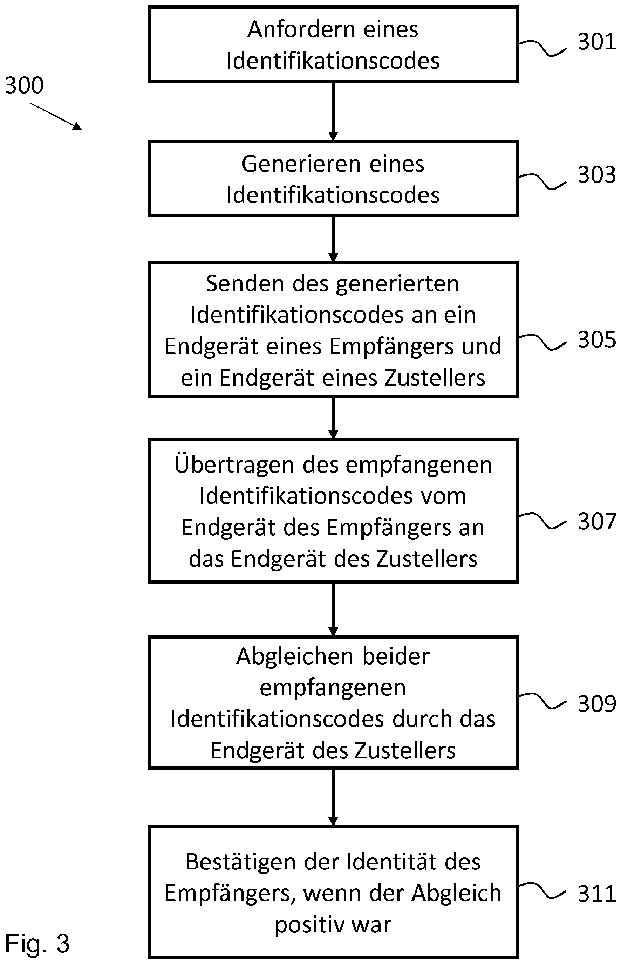

Fig. 3 zeigt ein Ablaufdiagramm 300 für ein Verfahren gemäß einer Ausgestaltung der Erfindung.

In einem ersten Schritt 301 wird ein Identifikationscode angefordert. Der Identifikationscode wird hierbei durch das mobile zweite Endgerät 105 von dem Codegenerator 101 angefordert. Dies kann beispielsweise durch eine Benutzereingabe des Zustellers der Lieferung erfolgen, der so die Übergabe seiner Lieferung an den Empfänger initiieren möchte. Hierfür sendet das zweite Endgerät 105 über ein in Fig. 2 nicht gezeigtes Funkmodul einen Anforderungsbefehl an den Codegenerator 101. Wird der Identifikationscode erst unmittelbar bei der Zustellung angefordert, so können sehr kurzlebige Identifikationscodes erzeugt werden, was die Datensicherheit erhöht. Alternativ kann die Anforderung auch von einem anderen Computersystem oder einer Einrichtung erfolgen und unabhängig von dem mobilen zweiten Endgerät 105 sein. Beispielsweise kann eine Anforderung über ein Händlerportal erfolgen, im Rahmen der Generierung eines Lieferauftrags. In einer alternativen Ausgestaltung ist es jedoch ebenso möglich, dass der Schritt 301 des Verfahrens entfällt und der Identifikationscode generiert wird, ohne dass eine Anforderung erfolgt.

Der Codegenerator 101 generiert im Schritt 303 einen Identifikationscode. Dies erfolgt auf die Anforderung von Schritt 301. In einer alternativen Ausgestaltung erfolgt die Generierung des Identifikationscodes ohne eine Anforderung.

Das Generieren des Identifikationscodes in dem Codegenerator 101 in Schritt 303 umfasst das Erzeugen eines Codes, der über eine Datenverbindung sowohl an das erste Endgerät 103 als auch an das mobile zweite Endgerät 105 gesendet werden kann. In dem Ausführungsbeispiel umfasst das Generieren des Identifikationscodes ein Verknüpfen des Identifikationscodes mit einer bestimmten Lieferung, insbesondere einer Liefernummer. Auf diese Weise ist eine Zuordnung des generierten Identifikationscodes zu der bestimmten Lieferung möglich. In einer weiteren Ausgestaltung wird ein zufälliger Identifikationscode generiert, der erst später, beispielsweise aus einer Datenbank heraus, einer bestimmten Lieferung zugeordnet wird.

Im Schritt 305 wird der Identifikationscode sowohl an das erste Endgerät 103 als auch an das mobile zweite Endgerät 105 gesendet. Das Senden an diese beiden Endgeräte 103, 105 erfolgt ohne zeitliche Verzögerung zueinander, d. h. gleichzeitig. Auf diese Weise kann vermieden werden, dass entweder der Zusteller oder der Empfänger den Identifikationscode früher als der jeweils andere besitzt und somit manipulieren kann. In einer alternativen Ausgestaltung werden die generierten Informationscodes nicht gleichzeitig gesendet. Dies kann beispielsweise dann sinnvoll sein, wenn unterschiedliche Plattformen verwendet werden, wie beispielsweise ein Desktop-PC des Empfängers als erstes Endgerät 103 in Verbindung mit einem Drucker zum Ausdrucken des Identifikationscodes und ein Paketverwaltungsgerät als das mobile zweite Endgerät 105 des Zustellers. Dies kann dann den Ablauf des Verfahrens zur Identitätsprüfung vor Ort, also bei der Übergabe der Lieferung durch den Zusteller an den berechtigten Empfänger beschleunigen.

Im Verfahrensschritt 307 wird der von dem ersten Endgerät 103 empfangene Identifikationscode an das mobile zweite Endgerät 105 übertragen. Im beschriebenen Ausführungsbeispiel erfolgt die Übertragung des Identifikationscodes von dem ersten Endgerät 103 an das zweite Endgerät 105 dadurch, dass das erste Endgerät 103, beispielsweise ein Smartphone, auf einer Anzeige den Identifikationscode, beispielsweise einen zweidimensionalen Barcode, einen sogenannten QR-Code, darstellt. Diese Darstellung wird dann von der Kamera des mobilen zweiten Endgeräts 105 aufgenommen. Hierfür präsentiert der Empfänger dem Zusteller bzw. dem mobilen zweiten Endgerät 105 des Zustellers die Anzeige seines ersten Endgeräts 103, auf dem der Identifikationscode abgebildet wird. In einer alternativen Ausgestaltung findet die Übertragung durch eine Funkübertragung statt, wie beispielsweise eine Nahfeldkommunikation, engl. Near Field Communication (NFC), Bluetooth oder dergleichen. Die Verwendung einer solchen Technologie kann den Ablauf bei der Übergabe der Lieferung beschleunigen. In einer weiteren alternativen Ausgestaltung erfolgt die Übertragung durch eine akustische Tonfolge, die das erste Endgerät 103 aussendet. Diese Tonfolge kann dann von einem Mikrophon des mobilen zweiten Endgeräts 105 aufgenommen werden und in ein digitales Signal umgewandelt werden, um den Identifikationscode zu speichern und/oder weiterzuverarbeiten.

Nach dem Schritt 307, dem Übertragen des Identifikationscodes vom ersten Endgerät 103 an das mobile zweite Endgerät 105, liegen dem mobilen zweiten Endgerät 105 des Zustellers zwei Identifikationscodes vor. Zum einen ist in dem Speicher 203 der Identifikationscode gespeichert, den der Codegenerator 101 an das mobile zweite Endgerät 105 gesendet hat. Des Weiteren ist in dem Speicher 203 der übertragene Identifikationscode aus Schritt 307 gespeichert. In einer alternativen Ausgestaltung sind die Identifikationscodes in unterschiedlichen Speichern gespeichert.

In Schritt 309 werden diese beiden Identifikationscodes zueinander abgeglichen. Hierfür werden beide Identifikationscodes aus dem Speicher 203 ausgelesen und durch die Abgleichvorrichtung 205, beispielsweise einem Mikrocontroller, verglichen.

Handelt es sich bei dem Empfänger um den berechtigten Empfänger, so entspricht sein Identifikationscode dem von dem Codegenerator 101 generierten Identifikationscode, der an das erste Endgerät 103 des Empfängers gesendet wurde. Dieser ist dann mit dem Identifikationscode, der von dem Codegenerator 101 an das mobile zweite Endgerät 105 gesendet wurde identisch. In einer weiteren Ausgestaltung sind die beiden Identifikationscodes nicht identisch, weisen aber entsprechende Daten auf, die gegeneinander abgleichbar sind, so dass eine eindeutige Zuordnung beider übertragenen Identifikationscodes zu einer Lieferung möglich ist. In dieser Ausgestaltung kann der Identifikationscode, der von dem Codegenerator 101 an das erste Endgerät 103 gesendet wurde zusätzliche Quittierungsinformationen enthalten, um den Erhalt der Lieferung zu quittieren.

War der Abgleich positiv, so wird im Schritt 311 die Identität des Empfängers bestätigt. Hierzu kann die Abgleichvorrichtung 205 beispielsweise über einen Bildschirm und/oder einen Lautsprecher eine optische Anzeige bzw. ein akustisches Signal ausgeben. Der Zusteller weiß dann, dass der Empfänger der berechtigte Empfänger ist, und die Lieferung kann übergeben werden. Alternativ reicht das Ausbleiben einer Fehlermeldung, um einen positiven Abgleich zu bestätigen.

War der Abgleich jedoch negativ, d. h. entspricht der von dem ersten Endgerät 103 an das mobile zweite Endgerät 105 übertragene Identifikationscode nicht dem Identifikationscode, der von dem zweiten Endgerät 105 von dem Codegenerator 101 empfangen wurde, so ist der Empfänger nicht berechtigt, die Lieferung anzunehmen. Diese Information wird dann ebenfalls auf dem mobilen zweiten Endgerät 105 ausgegeben, um den Zusteller zu informieren.

Zusammenfassend kann gesagt werden, dass die Identität eines Paketempfängers durch die Kommunikation zweier Endgeräte 103, 105 überprüft werden kann. Dies wird durch einen Codegenerator 101, also ein zentrales System, bzw. eine zentrale Einrichtung, ermöglicht, der einen Identifikationscode für jedes Paket generiert und diesen an ein erstes Endgerät 103 und ein mobiles zweites Endgerät 105 übermittelt. Bei der Zustellung kann dann der Zusteller den Identifikationscode des ersten Endgeräts 103 des Empfängers mit seinem mobilen zweiten Endgerät 105 zusammenbringen und bestätigen, dass der Empfänger ein berechtigter Empfänger ist. Somit wird ein System 100 zur Identitätsprüfung von Paketempfängern geschaffen.

### BEZUGSZEICHENLISTE

- 100: System
- 101: Codegenerator
- 103: erstes Endgerät
- 105: zweites Endgerät
- 107a, 107b, 107c: Pfeil
- 201: Empfangseinrichtung
- 203: Speicher
- 205: Abgleichvorrichtung
- 300: Ablaufdiagramm
- 301 bis 311: Verfahrensschritt

## Patentansprüche

1. Verfahren zur Prüfung einer Identität eines Empfängers einer Lieferung gegenüber einem Zusteller der Lieferung umfassend die Schritte:
- Generieren eines Identifikationscodes in einem Codegenerator (101);
- Senden des generierten Identifikationscodes an ein erstes Endgerät (103) des Empfängers;
- Senden des generierten Identifikationscodes an ein mobiles zweites Endgerät (105) des Zustellers;
- Übertragen des empfangenen Identifikationscodes von dem ersten Endgerät (103) an das mobile zweite Endgerät (105);
- Abgleichen des an das mobile zweite Endgerät (105) gesendeten generierten Identifikationscodes und des an das mobile zweite Endgerät (105) übertragenen Identifikationscodes durch das mobile zweite Endgerät (105);
- Bestätigen der Identität des Empfängers, wenn der Abgleich positiv war.

2. Verfahren nach Anspruch 1, wobei der Schritt des Übertragens des empfangenen Identifikationscodes von dem ersten Endgerät (103) an das mobile zweite Endgerät (105) mittels einer Kamera des mobilen zweiten Endgeräts (105) erfolgt.

3. Verfahren nach Anspruch 1, wobei der Schritt des Übertragens des empfangenen Identifikationscodes von dem ersten Endgerät (103) an das mobile zweite Endgerät (105) mittels akustischer Übertragung erfolgt.

4. Verfahren nach Anspruch 1, wobei der Schritt des Übertragens des empfangenen Identifikationscodes von dem ersten Endgerät (103) an das mobile zweite Endgerät (105) mittels Nahfeldübertragung, insbesondere NFC, erfolgt.

5. Verfahren nach einem der Ansprüche 1 bis 4, wobei nach dem Bestätigen der Identität des Empfängers die Übergabe der Lieferung quittiert wird.

6. Verfahren nach einem der Ansprüche 1 bis 5, wobei die beiden Schritte des Sendens des generierten Identifikationscodes ohne zeitliche Verzögerung zueinander ausgeführt werden.

7. Verfahren nach einem der Ansprüche 1 bis 6, wobei vor dem Schritt des Generierens eines Identifikationscodes der folgende Schritt ausgeführt wird:
- Anfordern der Identifikationscodes durch das mobile zweite Endgerät (105).

8. Verfahren nach einem der Ansprüche 1 bis 7, wobei das erste Endgerät (103) den empfangenen Identifikationscode automatisch dem mobilen zweiten Endgerät (105) bereitstellt.

9. Mobiles Endgerät (105) mit
einer Empfangseinrichtung (201), die dazu eingerichtet ist, Identifikationscodes zu empfangen;
einem Speicher (203) zum Speichern der empfangenen Identifikationscodes; und
einer Abgleichvorrichtung (205), zum Abgleichen zweier in dem Speicher (203) gespeicherter Identifikationscodes, die einer Lieferung zugeordnet sind;
wobei das mobile Endgerät (105), dazu eingerichtet ist, nach einem positiven Abgleich eine Identität eines Empfängers der Lieferung zu bestätigen.

10. Mobiles Endgerät (105) nach Anspruch 9, wobei die Empfangseinrichtung (201) eine Kamera und/oder ein Mikrofon und/oder ein Funkmodul umfasst.

11. Mobiles Endgerät (105) nach einem der Ansprüche 9 oder 10, wobei das mobile Endgerät (105) dazu eingerichtet ist, einen Identifikationscode von einem Codegenerator (101) anzufordern.

12. Mobiles Endgerät (105) nach einem der Ansprüche 9 bis11, wobei das mobile Endgerät (105) dazu eingerichtet ist, den Identifikationscode als Quittierung anzunehmen.

13. Mobiles Endgerät (105) nach einem der Ansprüche 9 bis 12, wobei das mobile Endgerät (105) dazu eingerichtet ist, ein Signal auszusenden, um eine Übertragung des Identifikationscodes von einem anderen Endgerät an das mobile Endgerät (105) zu initiieren.

14. System (100) zum Identifizieren eines Empfängers einer Lieferung gegenüber einem Zusteller der Lieferung umfassend ein erstes Endgerät (103) eines Empfängers, ein mobiles zweites Endgerät (105) eines Zustellers und einen Codegenerator (101), wobei das System (100) dazu eingerichtet ist, ein Verfahren nach einem der Ansprüche 1 bis 8 auszuführen.
